Europäisches Patentamt

European Patent Office

Office européen des brevets

(19)

(11) Veröffentlichungsnummer: **0 440 926 B1**

# EUROPÄISCHE PATENTSCHRIFT

(12)

(45) Veröffentlichungstag der Patentschrift: **06.04.94**

(21) Anmeldenummer: **90123852.7**

(22) Anmeldetag: **11.12.90**

(51) Int. Cl.⁵: **G02B 6/44**

(54) **Verfahren zur Herstellung eines Grundelementes für Nachrichtenübertragungskabel mit Lichtwellenleitern.**

(30) Priorität: **05.02.90 DE 4003311**

(43) Veröffentlichungstag der Anmeldung:
**14.08.91 Patentblatt 91/33**

(45) Bekanntmachung des Hinweises auf die Patenterteilung:
**06.04.94 Patentblatt 94/14**

(84) Benannte Vertragsstaaten:
**DE FR GB IT**

(56) Entgegenhaltungen:
**EP-A- 0 109 149**
**EP-A- 0 166 621**
**DE-A- 3 320 072**
**US-A- 4 477 147**

(73) Patentinhaber: **kabelmetal electro GmbH**
**Postfach 260**
**D-30002 Hannover(DE)**

(72) Erfinder: **Ziemek, Gerhard, Dr.-Ing.**
**Bunzlauer Strasse 6**
**W-3012 Langenhagen(DE)**

EP 0 440 926 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft ein Verfahren bzw. eine Vorrichtung zur Herstellung eines Grundelementes für ein Nachrichtenübertragungskabel nach der Gattung des Anspruches 1 bzw. des Anspruches 5 (DE-PS 33 09 996).

Die bereits seit Jahren zur Fortleitung des Lichtes eingesetzten optischen Fasern wie Glasfasern sind sowohl gegenüber hohen Zugkräften als auch gegen Biegung um kleine Radien empfindlich. Zum Schutz dieser Fasern sind daher bereits verschiedene Herstellungsverfahren bekannt gworden, die letztlich darauf abzielen, eine Entlastung der in einer Hülle angeordneten optischen Fasern gegenüber mechanischen Kräften herbeizuführen. So ist bereits ein Verfahren zur Herstellung eines Nachrichtenkabels mit Lichtwellenleitern bekannt (DE-OS 27 43 260), das einen gewellten Metallmantel aufweist, in dem die optischen Fasern mit Überlänge angeordnet sind. Zur Herstellung dieser Überlänge werden die Fasern mit höherer Geschwindigkeit abgezogen als das für die Hülle verwendete Metallband. In der Praxis hat sich dieses bekannte Verfahren bisher jedoch nicht durchsetzen können.

Bei dem Verfahren nach der obengenannten DE-PS 33 09 996 wird um die optische Faser zunächst kontinuierlich ein längseinlaufendes Metallband zum Rohr geformt und dieses Band an den Kanten längsnahtverschweißt. Die Faser wird, solange das Rohr noch nicht geschlossen ist, punktweise mit dem Metallband verklebt, so daß zwischen Faser und Metallband kein Schlupf entsteht. In das verschweißte und damit geschlossene Rohr werden dann abschließend von außen in axialen Abständen sich in Umfangsrichtung erstreckende Kerben eingedrückt, durch welche das Rohr gegenüber der innenliegenden Faser verkürzt wird. Auch hierdurch wird eine Überlänge der optischen Fasern innerhalb der Umhüllung erreicht, gegen äußere mechanische Einwirkungen ist eine solche Faser daher entlastet.

Eine andere bekannte Möglichkeit (EP-A 299 123) sieht vor, daß zur Herstellung einer Überlänge der in einem metallischen Rohr befindlichen optischen Faser das Rohr nach dem Verschweißen in seinem Querschnitt reduziert wird, so daß das für die Umhüllung der optischen Faser verwendete Metallband langsamer als die Faser selbst in die Herstellungsvorrichtung einläuft. Diese Relativbewegung zwischen dem einlaufenden Band und der einlaufenden Faser bewirkt eine Überlänge im fertigen Produkt.

Teils sind die bekannten Verfahren und Vorrichtungen sehr aufwendig, so daß sie sich möglicherweise aus diesem Grunde bisher in der Praxis nicht haben durchsetzen können, teils ist die Überlänge nicht steuerbar, so daß nicht gewährleistet ist, daß die jeweils gewählte Überlänge ausreicht, die optischen Fasern in allen möglichen Anwendungsfällen tatsächlich frei von mechanischen Beanspruchungen zu halten. Das gilt insbesondere für die Fälle, in denen durch ein metallisches Rohr geschützte Lichtwellenleiter über große Strecken und unter erhöhten äußeren mechanischen Drücken verlegt werden müssen. Solche Fälle sind z. B. im Tiefseebereich verlegte Nachrichtenübertragungskabel.

Ausgehend von diesem Stand der Technik liegt daher der Erfindung die Aufgabe zugrunde, das eingangs geschilderte Verfahren bzw. die zugehörige Vorrichtung so weiterzubilden, daß die Grundelemente einfach herstellbar und die Überlängen den gestellten Anforderungen entsprechend wählbar sind.

Diese Aufgabe wird durch das Verfahren mit den kennzeichnenden Merkmalen des Anspruches 1 bzw. durch die Vorrichtung mit den kennzeichnenden Merkmalen des Anspruches 5 gelöst.

Die mit der Erfindung erzielten Vorteile bestehen insbesondere darin, daß auf einfache Art und Weise die kontinuierliche Herstellung geschützter optischer Fasern in praktisch beliebigen Längen ermöglicht wird, wobei die Überlänge der optischen Fasern in ihrer geschlossenen metallischen Hülle durch die kontrollierte Erwärmung und die damit verbundene vorübergehende Längung des Metallbandes einstellbar ist.

Die Erfindung geht dabei von der Überlegung aus, daß bei einer Anordnung aus einer optischen Faser in einem metallischen Rohr bei Raumtemperatur sowohl das Rohr als auch die Faser die Länge $L_0$ besitzen. Heizt man eine solche Rohr-Faser-Kombination um den Betrag $\Delta\vartheta$ auf, dann ergibt sich für das Metallrohr

$$L_{t1} = L_0 \, (1 \, + \, \alpha_m \bullet \Delta\vartheta).$$

Dabei sind $L_{t1}$ die Länge des durch den Temperaturanstieg verlängerten Rohres, $\alpha_m$ der lineare Wärmeausdehnungskoeffizient des Metalls.

Entsprechendes gilt für die im Rohrinnern befindliche optische Faser, nämlich

$$L_{t2} = L_0 \, (1 \, + \, \alpha_{gl} \bullet \Delta\vartheta).$$

Dabei ist $L_{t2}$ die Länge der durch den Temperaturanstieg verlängerten optischen Faser, $\alpha_{gl}$ der lineare Wärmeausdehnungskoeffizient der Faser/Coating Kombination. Für letzteren gilt, daß er im Bereich von 0 bis 100°C sehr klein gegenüber dem Wärmeausdehnungskoeffizienten des Metalles ist, so daß er für die Praxis vernachlässigbar bleibt.

Führt man nun eine optische Faser, bezogen auf eine definierte Strecke gleicher Länge wie das Metallband, mit Raumtemperatur in das erwärmte Metallrohr ein und kühlt das Metallrohr ab, dann ergibt sich, da die Faser nicht ausweichen kann, sondern im Rohrinnern geführt ist, eine Überlänge gemäß

$$\frac{L_{t2} - L_0}{L_0} = (\alpha_m - \alpha_{gl}) \cdot \Delta\vartheta = \varepsilon.$$

Da $\alpha_m$ in dem betrachteten Bereich von 0 - 100°C eine dem jeweiligen Metall zugeordnete Konstante ist und $\alpha_{gl}$ vernachlässigt werden kann, läßt sich die Überlänge $\varepsilon$ aus dem Produkt des Wärmeausdehnungskoeffizienten des verwendeten Metalles und dem aus einer Temperaturmessung ermittelten Temperaturanstieg exakt bestimmen.

Durch die in den Unteransprüchen aufgeführten Maßnahmen sind vorteilhafte Weiterbildungen und Verbesserungen des im Anspruch 1 angegebenen Verfahrens bzw. der im Anspruch 5 angegebenen Vorrichtung möglich.

Für eine möglichst genaue Steuerung der Erwärmung und damit der Längung des Metallbandes ist es vorteilhaft, wenn die Erwärmung des Metallbandes induktiv oder durch Widerstandsheizung erfolgt.

Zur exakten Einhaltung der gewünschten Längung des Metallbandes und damit der gewünschten Überlänge der optischen Faser in dem metallischen Rohr ist es von Vorteil, wenn die Erwärmung des Metallbandes in Abhängigkeit von der Fertigungsgeschwindigkeit gesteuert wird.

Aus dem gleichen Grund ist es ebenfalls vorteilhaft, wenn die Temperatur des Metallbandes während der Formgebung zum Rohr oder unmittelbar nach deren Abschluß fortlaufend gemessen wird. Diese fortlaufende Temperaturmessung ist notwendig, wenn, wie bei der Erfindung vorgesehen, praktisch beliebige Längen herstellbar sein sollen und die geforderte Überlänge in jedem Längenabschnitt des hergestellten Grundelementes so gewählt werden soll, daß in jedem Fall die gegen mechanische Einwirkungen empfindliche optische Faser geschützt wird.

Aus diesem Grund ist es in Weiterführung des Erfindungsgedankens besonders vorteilhaft, wenn innerhalb oder unmittelbar hinter der Formungseinrichtung eine Temperaturmeßeinrichtung vorgesehen ist, die ein Kontaktthermoelement aus an dem geformten Rohr schleifenden Streifen einer Thermoelementpaarung aufweist.

Dabei ist es von Vorteil, wenn diese Streifen als Andrückfedern ausgebildet und aus Kupfer bzw. Konstantan hergestellt sind. Eine solche Anordnung läßt eine kontinuierliche Temperaturmessung zu, die als Ausgangssignal für eine kontrollierte Aufheizung des einlaufenden Metallbandes genutzt werden kann. Diese kontrollierte Aufheizung kann der gewünschten Faserüberlänge und auch der Fertigungsgeschwindigkeit angepaßt sein.

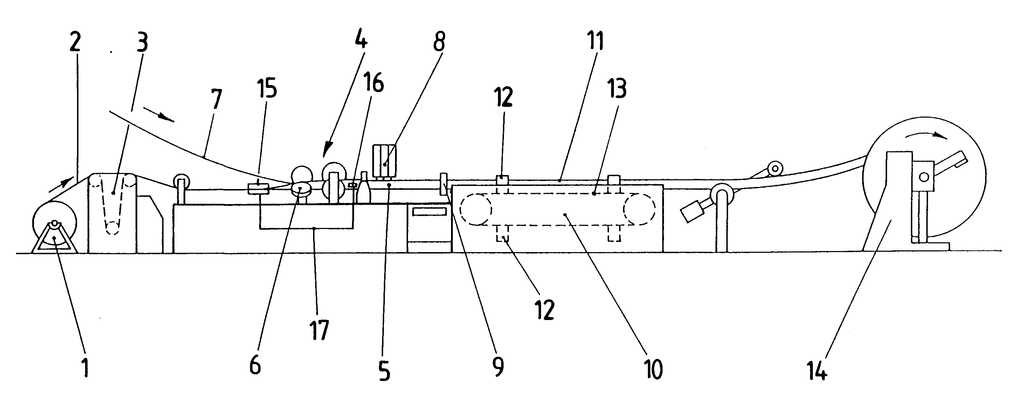

Ein Ausführungsbeispiel einer erfindungsgemäßen Vorrichtung zur Herstellung eines Grundelementes für Nachrichtenübertragungskabel ist in der Figur dargestellt und in der nachfolgenden Beschreibung näher erläutert.

Von einem Bandlauf 1 wird ein metallisches Band 2, beispielsweise aus Stahl oder Kupfer, von z. B. 25 mm Breite und einer Wanddicke von 0,9 mm abgezogen. In einer sogenannten Bandwäsche 3 wird das Band 2 entfettet und gereinigt. In einer nicht dargestellten Besäumungseinrichtung werden die Bandkanten geschnitten, so daß das Metallband 2 z. B. eine Bandbreite von 21 mm aufweist. Diese Maßnahme gewährleistet einen ständig gleichbleibenden Durchmesser eines aus dem Metallband 2 geformten Rohres. Darüberhinaus stehen für Schweißungen oxidfreie Oberflächen an den Kanten des Metallbandes 2 zur Verfügung. Das an den Bandkanten beschnittene Metallband 2 läuft nunmehr in die Formungseinrichtung 4 ein und wird dort in mehreren Stufen zu einem geschlitzten Rohr 5 geformt. Die Formungseinrichtung 4 besteht aus einer Reihe von Formungswerkzeugen 6 wie z. B. aus ersten Rollenwerkzeugen, in Durchlaufrichtung nachfolgenden konusartig geformten Rohren und abschließend angeordneten Formringen. In das sich hierdurch bildende geschlitzte Rohr 5 wird zumindest eine optische Faser 7 eingelegt.

Mit 8 ist eine Schweißeinrichtung bezeichnet, die zum Verschweißen der nach dem Formvorgang zum geschlitzten Rohr 5 stumpf gegeneinander stoßenden Längskanten des Metallbandes 2 dient. Im dargestellten Ausführungsbeispiel ist diese Schweißeinrichtung ein Dreifachbrenner, der unter Schutzgas betrieben wird; sollen größere Längen hergestellt werden, die z. B. für Unterwasserkabel gebraucht werden, dann

3

kann es vorteilhaft sein, wenn die Schweißeinrichtung 8 eine Laserschweißeinrichtung ist. Diese Schweißeinrichtung hat auch dann Vorteile, wenn geschlitzte Rohre 5 kleinerer Abmessungen an ihren gegeneinanderstoßenden Längskanten zu verschweißen sind und hohe Fertigungsgeschwindigkeiten verlangt werden.

Das verschweißte Rohr wird anschließend zur Glättung der Oberfläche und zur Querschnittreduzierung durch den Ziehring 9 hindurchgezogen. Als Abzugsvorrichtung dient zweckmäßigerweise ein sogenannter Spannbackenabzug 10, der aus einer Vielzahl von das geschlossene Rohr 11 umfassenden und wieder freigebenden Spannzangen 12 besteht. Diese sind bekanntermaßen an endlosen, angetriebenen Ketten 13 befestigt. Das nunmehr fertiggestellte Grundelement wird dann zur Prüfung oder weiteren Verarbeitung, beispielsweise zur Einseilung in die Seele eines Nachrichtenübertragungskabels auf die Vorratstrommel 14 aufgewickelt.

Wie die Figur erkennen läßt, wird die optische Faser 7 in das sich bildende geschlitzte Rohr 5 von oben eingeführt. Mit dem von dem Bandlauf 1 abgezogenen Metallband 2 besteht ein Gleichlauf; zwischen den beiden das Grundelement bildenden Elementen besteht also keine Relativgeschwindigkeit. Das bedeutet, daß in dem fertiggestellten Rohr 11 die optische Faser 7 ohne Überlänge enthalten ist. Um die sich hieraus ergebende Gefahr für die optische Faser 7 aufgrund äußerer mechanischer Kräfte zu beseitigen, sieht nun die Erfindung vor, daß im Bereich des Einführens der optischen Faser 7 eine reversible Längung des Bandes 2 erfolgt, die zu einer Überlänge der Faser 7 gegenüber dem Metallband 2 bzw. dem umgebenden geschlossenen Rohr 11 führt. Hierzu dient eine z. B. induktiv wirkende Aufwärmvorrichtung 15, die im dargestellten Ausführungsbeispiel das Metallband 2 noch vor dem eigentlichen Formvorgang auf die für die benötigte Überlänge der optischen Faser 7 unter Berücksichtigung der vorgesehenen Fertigungsgeschwindigkeit notwendige Bandtemperatur erwärmt. Diese Aufheizung erfolgt kontrolliert, d. h., das erwärmte Metallband 2 wird zu einem geschlitzten Rohr 5 geformt, das die gewünschte Übertemperatur hat. Um das zu erreichen, ist innerhalb der Formungseinrichtung 4 eine Temperaturmeßeinrichtung 16 vorgesehen, die z. B. aus einem Kontaktthermoelement aus auf dem sich bildenden Schlitzrohr 5 schleifenden Streifen einer üblichen Thermoelementpaarung besteht. Aufgrund der gemessenen Temperatur und aufgrund des durch das jeweilige Metallband 2 gegebenen Wärmeausdehnungskoeffizienten kann dann die Überlänge

$$\epsilon = \alpha_m \cdot \Delta\vartheta$$

der optischen Faser 7 in dem als Hülle dienenden Rohr 11 bestimmt werden. Zweckmäßig wird man, wie in der Figur schematisch angedeutet, über eine Rückführung 17 die aufzubringende Heizleistung der Aufwärmvorrichtung 15 steuern.

Die Temperaturmessung sowie die kontrollierte Aufheizung des Metallbandes 2 erfolgt kontinuierlich, die optische Faser 7 wird in das sich bildende geschlitzte Rohr 5 in einem Bereich eingeführt, in dem die gesteuerte Aufheizung des Metallbandes 2 bereits erfolgt ist und die gewünschte Längung eingesetzt hat.

Die so hergestellten Grundelemente sind insbesondere zur Übertragung von Informationen mittels optischer Fasern in Unterwasserkabeln geeignet, bei denen einerseits die empfindlichen optischen Fasern 7 gegen Druck und Schwingungen geschützt sein müssen und zum anderen die Grundelemente in der Lage sein müssen, große Strecken zu überbrücken. Das sind auch die Gründe dafür, daß das die optischen Fasern 7 umgebende Rohr 11 ein bestimmtes Verhältnis von Durchmesser zur Wanddicke haben muß. Wegen der extrem hohen Druckbelastung bei solchen Unterwasserkabeln wird man von vergleichsweise kleinen Rohrdurchmessern ausgehen, zumal große Längen von mehreren Kilometern in einem Stück gefordert werden, um Spleißstellen am Kabel zu vermeiden. Es bieten sich daher Rohre an, deren Außendurchmesser zwischen 5 und 10 mm und deren entsprechende Wanddicke 0,2 bis 1,0 mm beträgt.

**Patentansprüche**

1. Verfahren zur Herstellung eines Grundelementes für ein Nachrichtenübertragungskabel in Form eines Lichtwellenleiters aus wenigstens einer mit einer Überlänge in einer geschlossenen metallischen Hülle (11) angeordneten optischen Faser (7), bei dem ein längseinlaufendes Metallband (2) zu einem Rohr (5) geformt, die optische Faser (7) in das sich bildende Rohr (5) eingelegt und das Metallband (2) an seinen Längskanten verschweißt wird, dadurch gekennzeichnet,
   - daß das Metallband (2) vor oder während seiner Formgebung zum Rohr (5) erwärmt wird,
   - daß die Erwärmung des Metallbandes (2) entsprechend einer gewünschten Verlängerung desselben gesteuert wird,
   - daß die optische Faser (7) in den durch die Erwärmung gelängten Bereich des sich bildenden Rohres (5) eingeführt wird und

- daß das zu dem Rohr (5) geformte Metallband (2) abgekühlt und seine ursprüngliche Länge wieder hergestellt wird.

2. Verfahren nach Anspruch 1, dadurch gekennzeichnet, daß die Erwärmung des Metallbandes (2) induktiv oder durch Widerstandsheizung erfolgt.

3. Verfahren nach Anspruch 1 oder 2, dadurch gekennzeichnet, daß die Erwärmung des Metallbandes (2) in Abhängigkeit von der Fertigungsgeschwindigkeit gesteuert wird.

4. Verfahren nach einem der Ansprüche 1 bis 3, dadurch gekennzeichnet, daß die Temperatur des Metallbandes (2) während der Formgebung zum Rohr (5) oder unmittelbar nach deren Abschluß fortlaufend gemessen wird.

5. Vorrichtung zur Herstellung eines Grundelementes für ein Nachrichtenübertragungskabels in Form eines Lichtwellenleiters aus wenigstens einer mit einer Überlänge in einer geschlossenen metallischen Hülle (11) angeordneten optischen Faser (7) mit einem Verfahren nach einem der Ansprüche 1 bis 4, wobei die Vorrichtung einen Bandlauf (1), von dem ein Metallband (2) abziehbar ist, eine Formungseinrichtung (4) zum Formen des Metallbandes (2) zu einem geschlitzten Rohr (5), eine Schweißeinrichtung (8) zum anschließenden Verschweißen der Längskanten des Metallbandes (2) sowie eine Abzugsvorrichtung (10) zum Ziehen des Metallbandes (2) durch die Vorrichtung aufweist, dadurch gekennzeichnet, daß vor oder im Bereich der Formungseinrichtung (4) eine Aufwärmvorrichtung (15) zum Erwärmen des Metallbandes (2) vorgesehen ist, und eine Temperaturmeßeinrichtung (16) zur Kontrolle der Metallband temperatur innerhalb oder unmittelbar hinter der Formungseinrichtung (4) vorgesehen ist.

6. Vorrichtung nach Anspruch 5, dadurch gekennzeichnet, daß die Temperaturmeßeinrichtung (16) ein Kontaktthermoelement aus an dem geformten Rohr (5) schleifenden Streifen einer Thermoelementpaarung aufweist.

7. Vorrichtung nach Anspruch 6, dadurch gekennzeichnet, daß die Thermoelementpaarung aus als Andrückfedern ausgebildeten Streifen aus Kupfer bzw. Konstantan besteht.

**Claims**

1. Method for fabricating a basic element for an information transmission cable in the form of an optical waveguide consisting of at least one optical fibre (7) which is arranged with excess length in a closed metallic sheath (11), which method comprises shaping a metal strip (2), running in longitudinally, into a tube (5), inserting the optical fibre (7) into the tube (5) being formed and welding the metal strip (2) at its longitudinal edges, characterized in that
   - the metal strip (2), before or while it is shaped into the tube (5), is heated,
   - in that the heating of the metal strip (2) is controlled in accordance with a desired elongation thereof,
   - in that the optical fibre (7) is introduced into that zone of the tube (5) being formed which has been elongated by the heating, and
   - in that the metal strip (2) shaped into the tube (5) is cooled and its original length is restored.

2. Method according to Claim 1, characterized in that the heating of the metal strip (2) is carried out inductively or by resistance heating.

3. Method according to Claim 1 or 2, characterized in that the heating of the metal strip (2) is controlled as a function of the production rate.

4. Method according to any one of Claims 1 to 3, characterized in that the temperature of the metal strip (2), while it is shaped into the tube (5) or immediately thereafter, is measured continuously.

5. Appliance for fabricating a basic element for an information transmission cable in the form of an optical waveguide consisting of at least one optical fibre (7) which is arranged with excess length in a closed metallic sheath (11), by means of a method according to any one of Claims 1 to 4, the appliance having a strip run (1), off which a metal strip (2) can be drawn, a shaping device (4) for shaping the

5

metal strip (2) into a slotted tube (5), a welding device (8) for subsequent welding of the longitudinal edges of the metal strip (2), and a take-off appliance (10) for drawing the metal strip (2) through the appliance, characterized in that upstream of, or in the region of the shaping device (4) a heating-up appliance (15) for heating the metal strip (2) is provided, and a temperature-measuring device (16) for monitoring the metal strip temperature within or immediately downstream of the shaping device (4) is provided.

6. Appliance according to Claim 5, characterized in that the temperature-measuring device (16) has a contact thermoelement consisting of strips, sliding on the shaped tube (5), of a thermocouple.

7. Appliance according to Claim 6, characterized in that the thermocouple consists of copper strips or constantan strips fashioned as pressure springs.

**Revendications**

1. Procédé de fabrication d'un élément de base pour un câble de transmission d'informations en forme de conducteurs d'ondes lumineuses avec au moins une fibre optique (7) disposée avec surlongueur dans une enveloppe métallique fermée (11), dans lequel un ruban métallique (2) défilant longitudinalement est formé en un tube (5), la libre optique (7) est disposée dans le tube (5) en formation, et le ruban métallique (2) est soudé sur ses bords longitudinaux caractérisé en ce que
   - le ruban métallique (2) est chauffé avant ou pendant son formage en tube (5),
   - le chauffage du ruban métallique (2) est commandé selon l'allongement désiré de ce ruban,
   - la libre optique (7) est insérée dans l'espace allongé par le chauffage défini par le tube en formation (5),
   - le ruban métallique (2) formé en tube (5) est refroidi et reprend sa longueur initiale.

2. Procédé selon la revendication 1 caractérisé en ce que le chauffage du ruban métallique (2) se fait par induction ou par chauffage résistif.

3. Procédé selon l'une des revendications 1 ou 2 caractérisé en ce que le chauffage du ruban métallique (2) est commandé en suivant la vitesse de fabrication.

4. Procédé selon l'une des revendications 1 à 3 caractérisé en ce que la température du ruban métallique (2) est mesurée en continu pendant la formation du tube (5) ou aussitôt après sa terminaison.

5. Dispositif pour fabriquer un élément de base d'un câble de transmission d'informations en forme de conducteurs d'ondes optiques ayant au moins une fibre optique (7) disposée avec surlongueur dans une enveloppe métallique fermée (11) avec un procédé selon l'une des revendications 1 à 4, dans lequel le dispositif comporte un dérouleur de ruban (1) duquel on peut tirer un ruban métallique (2), un dispositif de formage (4) pour former un tube fendu (5) à partir du ruban métallique (2), un dispositif de soudage (8) ensuite souder des bords longitudinaux du ruban métallique (2), de même qu'un dispositif de tirage (10) pour tirer le ruban métallique (2)
   caractérisé en ce qu'il est prévu un dispositif de chauffage (15) devant ou dans la zone du dispositif de formation (4) pour chauffer le ruban métallique ainsi qu'un dispositif de mesure de température (16) pour contrôler la température du ruban métallique à l'intérieur ou juste après le dispositif de formation (4).

6. Dispositif selon la revendication 5 caractérisé en ce que le dispositif de mesure de température (16) comporte un élément thermique de contact constitué par des pattes d'une paire d'éléments thermiques traînant sur le tube (5) formé à partir le ruban.

7. Dispositif selon la revendication 6 caractérisé en ce que la paire d'éléments thermiques est constitué de rubans de cuivre ou de constantan formant des ressorts de pression.